# EUROPÄISCHE PATENTANMELDUNG

(11) **EP 3 263 186 A1**
(43) Veröffentlichungstag der Anmeldung: **03.01.2018**
(21) Anmeldenummer: 17177765.9
(22) Anmeldetag: 26.06.2017
(51) Int. Cl.: A62C 2/06, A62C 3/16, H01B 7/29, H02G 3/04

(54) **BRANDSCHUTZABDECKUNG**

(30) Priorität: 27.06.2016 DE 102016111689
(71) Anmelder: svt BRANDSCHUTZ Vertriebsgesellschaft mbH, 21217 Seevetal (DE)
(72) Erfinder: Reher, Reinald, 59379 Selm (DE)
(74) Vertreter: Stüven, Ralf

(57) **Zusammenfassung**

Die Erfindung betrifft eine Brandschutzabdeckung, insbesondere zur Abdeckung einer Kabeltragkonstruktion, ein Verfahren zu deren Herstellung sowie Anordnungen, die eine Brandschutzabdeckung umfassen. Aufgabe der vorliegenden Erfindung ist es, eine einfache, leicht herstellbare, leicht zu handhabende und vergleichsweise kostengünstige Brandschutzabdeckung bereit zu stellen. Erfindungsgemäß wird die Aufgabe in einem ersten Aspekt gelöst durch eine Brandschutzabdeckung (1), insbesondere für eine Kabeltragkonstruktion (7), die einen flexiblen im Wesentlichen unelastischen flächigen Träger (2) mit einer ersten Fläche (3) und einer gegenüberliegenden zweiten Fläche (4) umfasst, wobei auf der ersten Fläche (3) eine Flammschutzmittelschicht (5) und unmittelbar auf der Flammschutzmittelschicht (5) eine Melaminharzschaumschicht (6) angeordnet ist.

## Beschreibung

Die Erfindung betrifft eine Brandschutzabdeckung, insbesondere zur Abdeckung einer Kabeltragkonstruktion, ein Verfahren zu deren Herstellung sowie Anordnungen, die eine Brandschutzabdeckung umfassen.

Brandschutzabdeckungen, beispielsweise in Form von Kabelbandagen oder Kabelmanschetten, sind grundsätzlich bekannt. Die EP 1 890 300 B1 beschreibt beispielsweise eine Kabelbandage für brandschutztechnische Zwecke mit einem Trägermaterial, das auf seiner einen Seite mit einem Dämmschichtbildner oder Ablationsbaustoff und auf seiner anderen Seite mit einer Kunststoff- oder Metallschicht versehen ist. Die DE 20 2009 008 978 U1 offenbart eine Kabeltragkonstruktion zur Aufnahme von Kabeln mit einer um die Kabeltragkonstruktion gewickelten Kabelbandage für brandschutztechnische Zwecke, wobei die Kabelbandage ein Trägermaterial aufweist, das auf seiner einen Seite mit einem Dämmschichtbildner oder Ablationsbaustoff versehen ist, wobei ein Randbereich der Kabelbandage zur Kabeltragkonstruktion hin derart umgeschlagen ist, dass die Seite mit dem Dämmschichtbildner oder Ablationsbaustoff den Kabeln zugewandt ist. Aus der EP 0 391 000 A2 ist darüber hinaus ein feuerfestes, zur Verwendung als Flammensperre geeignetes Gewebe bekannt, das auf einer Oberfläche eine atmungsfähige und intumeszente Flammsperrschicht aufweist. Die EP 2 113 976 A1 offenbart eine Brandschutzabdeckung, insbesondere zum Abdecken eines Kabelkanals, mit einem Abdeckelement aus einer Brandschutzplatte. Die EP 2 821 108 A1 offenbart eine intumeszierende Brandschutzeinlage zum formschlüssigen Einlegen in eine Elektroinstallationsdose in Wänden oder Decken mit einem flächigen Grundkörper zur Abdeckung des Bodens der Elektroinstallationsdose sowie einem schwenkbar an einem Rand des Grundkörpers gelagerten Seitenelement zur Abdeckung der Umfangswand der Elektroinstallationsdose.

Zweck solcher Brandschutzabdeckungen ist die Abdeckung von brandgefährdeten oder brandgefährlichen Installationen, beispielsweise Kabeltragkonstruktionen mit Kabelanlagen, um diese im Brandfall vor dem Feuer zu schützen und die Ausbreitung des Feuers zu verhindern. Es besteht nach wie vor Bedarf an kostengünstigen, einfach herzustellenden und anzuwendenden Brandschutzabdeckungen.

Aufgabe der vorliegenden Erfindung ist es, eine einfache, leicht herstellbare, leicht zu handhabende und vergleichsweise kostengünstige Brandschutzabdeckung bereit zu stellen.

Erfindungsgemäß wird die Aufgabe in einem ersten Aspekt gelöst durch eine Brandschutzabdeckung, insbesondere für eine Kabeltragkonstruktion, die einen flexiblen im Wesentlichen unelastischen flächigen Träger mit einer ersten Fläche und einer gegenüberliegenden zweiten Fläche umfasst, wobei auf der ersten Fläche eine Flammschutzmittelschicht und unmittelbar auf der Flammschutzmittelschicht eine Melaminharzschaumschicht angeordnet ist. Das Flammschutzmittel kann je nach Schutzanforderung die gesamte erste Fläche des Trägers oder auch nur einen Teilbereich davon bedecken. Über die Art des Flammschutzmittels, die davon bedeckte Fläche und dessen Schichtdicke können unterschiedliche Schutzanforderungen abgedeckt werden. Auch die Melaminharzschicht kann je nach Schutzanforderung vollflächig angeordnet sein oder nur eine Teilfläche bedecken. Die Dicke der Melaminharzschaumschicht ist ebenfalls keinen Beschränkungen unterworfen und vom Einsatzzweck abhängig.

Die Brandschutzabdeckung gemäß der vorliegenden Erfindung ist einfach im Aufbau und kann leicht und kostengünstig hergestellt und eingesetzt werden. Sie kann vorteilhaft zum Brandschutz von Kabeln und Kabeltragkonstruktion, aber auch zur Abdeckung anderer brandgefährdeter oder brandgefährlicher Installationen oder Vorrichtungen eingesetzt werden. Die erfindungsgemäße Brandschutzabdeckung weist sehr gute Brandschutzeigenschaften auf und kann sowohl bei Neuinstallationen vorgesehen oder auch nachträglich installiert werden. Die erfindungsgemäß auf der Flammschutzmittelschicht vorgesehene Melaminharzschaumschicht trägt beispielsweise zu einer verbesserten Geräuschdämmung bei. Im Brandfall verkohlt die Melaminharzschaumschicht lediglich mit geringer Rauchentwicklung, während die Wirkung des Flammschutzmittels einsetzt. Im Falle der Abdeckung einer Kabeltragkonstruktion beispielsweise kann die Brandschutzabdeckung so um die Kabeltragkonstruktion gewickelt sein, dass die Seite mit der Flammschutzmittelschicht und der darauf befindlichen Melaminharzschaumschicht zum Inneren der Kabeltragkonstruktion, d.h. zu den Kabeln, gerichtet ist. Wird als Flammschutzmittel beispielsweise ein Dämmschichtbildner eingesetzt, der in einem Temperaturbereich aufschäumt, in dem der Melaminharzschaum zu verkohlen beginnt, kann der durch die Verkohlung der Melaminharzschaumschicht entstehende Ringsspalt um die Kabel bzw. den Kabelkanal durch den gleichzeitig aufschäumenden Dämmschichtbildner ausgefüllt werden.

Unter einer "Brandschutzabdeckung" wird hier ein Element oder eine Vorrichtung zur Abdeckung von vor Flammeneinwirkung zu schützenden baulichen oder sonstigen Einrichtungen, Vorrichtungen, Installationen und dergleichen, beispielsweise Kabeln, Kabeltragkonstruktion, Rohren, Elektroinstallations-Verteilern etc., verstanden, wobei die Abdeckung mittels Flammschutzmittel, beispielsweise Intumeszenz- und/oder Ablationsbaumaterialien, feuerwiderstandsfähig gemacht ist.

Unter einem "flächigen Träger" wird hier ein im Wesentlichen flächig ausgebildetes, d.h. sich in nur zwei Dimensionen in nennenswertem Umfang ausdehnendes Substrat verstanden. Ein Beispiel für einen flächigen Träger im Sinne der Erfindung ist ein Gewebeabschnitt, z.B. ein Glasfasergewebe, oder eine Folie, beispielsweise eine thermoplastische, duroplastische oder metallische Folie. Unter den Begriff "Träger" fallen auch Verstärkungslagen aus beispielsweise Glas- oder Kunststofffasern. Der Begriff "flexibel" in Zusammenhang mit dem flächigen Träger bedeutet, dass der Träger von Hand vorzugsweise ohne Werkzeugeinsatz geformt, beispielsweise gebogen, umgeschlagen und/oder gefaltet werden kann.

Unter einem "Flammschutzmittel", gegebenenfalls auch als "Flammschutzadditiv" bezeichnet, wird hier ein Stoff oder eine Stoffzusammensetzung verstanden, der bzw. die eine brandhemmende Wirkung, also eine die Ausbreitung eines Brandes einschränkende, verlangsamende oder verhindernde Wirkung entfaltet. Beispiele für Flammschutzmittel sind intumeszierende Materialien (Dämmschichtbildner) wie Blähgraphit oder Wasser abspaltende Stoffe (Ablationsbaustoffe) wie Aluminiumhydroxid. Der Begriff umfasst auch zwei oder mehrere verschiedene unabhängig voneinander oder synergistisch zusammen brandhemmend wirkende Stoffe oder Stoffzusammensetzungen.

Der Ausdruck "Flammschutzmittelschicht" bezeichnet eine Schicht, die mindestens ein Flammschutzmittel, beispielsweise einen Dämmschichtbildner, umfasst.

Unter einem "Dämmschichtbildner" oder "intumeszierenden Material" wird hier ein Material verstanden, das bei Raumtemperatur ein vergleichsweise geringes Volumen aufweist und unter Hitzeeinwirkung, vorzugsweise beginnend bei 150 °C bis 200 °C, eine deutliche Volumenzunahme erfährt, vorzugsweise unter Erzeugung eines erheblichen Blähdrucks von z.B. 1-2 N/mm². In der Regel wird bei einem solchen Material unter Wärmeeinwirkung, d.h. bei Überschreiten einer bestimmten als "Reaktionstemperatur" bezeichneten Temperatur, z.B. 150 °C, eine stark wärmedämmende, thermisch weitgehend stabile Schaumschicht gebildet, die die dahinter liegenden bzw. davon umschlossenen Materialien schützt. Der Schaumfaktor, d.h. das Verhältnis zwischen der Schichtdicke des Dämmschichtbildners im aufgeschäumten Zustand und der Schichtdicke des Dämmschichtbildners vor dem Aufschäumen, beträgt vorzugsweise mindestens 1,5, weiter bevorzugt mindestens 2, 3, 4, 5, 6, 8 oder mindestens 10, besonders bevorzugt mindestens 15, 20, 30, 40, 50 oder 60. Ein Beispiel für ein intumeszierendes Material ist Blähgraphit.

Unter einem "Ablationsbaustoff" werden ablativ wirkende Materialien verstanden, die bei Hitzeeinwirkung nur vergleichsweise gering expandieren, jedoch durch chemische und/oder physikalische Prozesse der Umgebung Wärmeenergie entziehen und dadurch eine Kühlung des mit dem Ablationsbaustoff beschichteten Trägermaterials bewirken. Der Ablationsbaustoff kann sich beispielsweise durch endotherme Reaktionen chemisch verändern, beispielsweise keramisieren, oder verdampfen, sublimieren oder schmelzen. Der Ablationsbaustoff kann beispielsweise Hydrate beinhalten, die bei Erhitzung Wasserdampf freisetzen. Darüber hinaus kann der Ablationsbaustoff gegebenenfalls Substanzen abgeben, die eine flammhemmende Wirkung haben. Nach Abschluss der chemischen und/oder physikalischen Prozesse bleibt häufig eine nichtbrennbare Masse zurück, die zusätzlich thermisch isolierend wirkt.

Unter der "Reaktionstemperatur eines Flammschutzmittels" oder der "Reaktionstemperatur einer Flammschutzmittelschicht" wird hier die Temperatur verstanden, bei der die flammhemmende Wirkung des Flammschutzmittels einsetzt, beispielsweise ein Stoff intumesziert oder Wasser freisetzt. Im Falle mehrerer verschiedener Flammschutzmittel bezieht sich dieser Ausdruck vorzugsweise auf den Stoff oder die Stoffzusammensetzung mit dem höchsten Anteil und/oder mit der niedrigsten Reaktionstemperatur.

Unter dem Begriff "Melaminharzschaum" oder "Melaminharzschaumstoff" wird ein flexibler, offenzelliger Schaumstoff aus Melaminharz, einem duroplastischen Kunststoff aus der Gruppe der Aminoplaste, verstanden. Melaminharze (MF) sind Kunstharze, die durch Polykondensation von Melamin (2,4,6-Triamino-s-triazin, CAS 108-78-1) mit Formaldehyd erhalten werden. Auch modifizierte Melaminharze, wie Melamin-Phenol-Formaldehyd-Harze (MPF) und Melamin-Harnstoff-Formaldehyd-Harze (UMF) fallen unter den Begriff. Melaminharzschaumstoff weist ein hohes Schallabsorptionsvermögens, eine gute Kältestabilität und ein sicheres Brandverhalten auf. Der Schaumstoff ist ohne Zusatz von Flammschutzmitteln schwer entflammbar, schmilzt und tropft im Brandfall nicht und verkohlt lediglich mit schwacher Rauchentwicklung. Ein geeigneter Melaminharzschaum ist beispielsweise unter der Marke Basotect® (BASF SE, Carl-Bosch-Str. 38, 67056 Ludwigshafen, Deutschland) kommerziell erhältlich. Die Temperatur, bei der der Melaminharzschaum zu verkohlen beginnt, wird hier gegebenenfalls auch als "Verkohlungstemperatur" bezeichnet.

Unter einer "duroplastischen Folie" wird eine Folie aus duroplastischem Material verstanden. Unter einer "thermoplastischen Folie" wird hier eine Folie aus thermoplastischem Material oder eine Folie mit einer thermoplastischen Matrix, verstanden, in die gegebenenfalls nichtthermoplastische Materialien, z.B. Fasern, eingebettet sein können. Unter einer "metallischen Folie" wird hier eine Folie aus einem Metall oder einer Metalllegierung verstanden. Eine metallische Folie kann z. B. aus Aluminium hergestellt sein.

In einer bevorzugten Ausführungsform der erfindungsgemäßen Brandschutzabdeckung entspricht die Reaktionstemperatur der Flammschutzmittelschicht im Wesentlichen der Verkohlungstemperatur der Melaminharzschaumschicht. Der Ausdruck, wonach die Reaktionstemperatur der Flammschutzmittelschicht der Verkohlungstemperatur der Melaminharzschaumschicht im Wesentlichen entspricht, bedeutet, dass Verkohlungstemperatur und Reaktionstemperatur möglichst eng zusammen liegen, vorzugsweise eine Differenz von nicht mehr als 50 °C, weiter bevorzugt nicht mehr als 45 °C, 40 °C, 35 °C, 30 °C, 25 °C, 20 °C, 15 °C oder mehr als 10 °C aufweisen. Dies sorgt dafür, dass die Verkohlung der Melaminharzschaumschicht und die Reaktion des Flammschutzmittels in möglichst geringem zeitlichem Abstand voneinander erfolgen.

In einer bevorzugten Ausführungsform der erfindungsgemäßen Brandschutzabdeckung besteht der Träger aus einem nicht-brennbaren Gewebe oder umfasst ein nicht brennbares Gewebe, oder besteht aus einer thermoplastischen, duroplastischen oder metallischen Folie oder umfasst eine thermoplastische, duroplastische oder metallische Folie. Als nicht-brennbares Gewebe kommt beispielsweise ein mineralisches Gewebe, beispielsweise ein Glasfasergewebe in Frage. Auch ein metallisches Gewebe kann eingesetzt werden.

Der Träger kann eine beliebige Form aufweisen. In einer bevorzugten Form ist der Träger im Wesentlichen rechteckförmig. Dies ist beispielsweise vorteilhaft beim Einsatz zur Abdeckung von Kabeltragkonstruktion und dergleichen. Der Träger kann aber beispielsweise auch andere Zuschnitte aufweisen. Es ist auch nicht notwendig, dass die Brandschutzabdeckung in Form einer Bandage oder Manschette eingesetzt wird. Vielmehr kann die Brandschutzabdeckung in vielseitiger Weise und in vielen Formen eingesetzt werden, beispielsweise als ebenes Element zur Brandsicherung von Elektroinstallations-Verteilern, Gehäusen und dergleichen.

Auf der der ersten Fläche gegenüberliegenden Fläche des Trägers kann beispielsweise eine Kunststoffschicht angeordnet sein, beispielsweise eine Polyurethan-, Polyester- oder Silikonschicht. In die Kunststoffschicht, die vorzugsweise eine Polyurethanschicht ist, können Metallpartikel, z.B. Aluminiumpartikel, eingelagert sein. Die Einlagerung von Metallpartikeln verbessert die Wärmereflexion der Fläche.

In einer bevorzugten Ausführungsform der erfindungsgemäßen Brandschutzabdeckung umfasst die Flammschutzmittelschicht mindestens ein in eine thermoplastische Matrix eingebettetes Flammschutzmittel, und die Melaminharzschaumschicht ist durch die thermoplastische Matrix der Flammschutzmittelschicht klebend gehalten. Das mindestens eine Flammschutzmittel ist oder umfasst vorzugsweise ein intumeszierendes Material, besonders bevorzugt Blähgraphit. Für den Fall, dass mehr als ein Flammschutzmittel eingesetzt wird, ist oder umfasst vorzugsweise wenigstens eines davon ein intumeszierendes Material. Das Matrixmaterial umfasst vorzugsweise mindestens einen Thermoplasten, bevorzugt Polyamid, Polylactat, Polymethylmethacrylat, Polystyrol, Polyetheretherketon, Polyvinylchlorid, Polyolefin, Polyester, Polyacrylat, thermoplastisches Polyurethan und/oder ein Ethylen/Vinylacetat-Copolymer, oder besteht daraus. Vorzugsweise handelt es sich bei dem Thermoplasten um ein Ethylen-Vinylacetat-Copolymer. Die Flammschutzmittelschicht kann als Beschichtung oder als thermoplastische Folie aufgebracht sein. Ein geeignetes Folienmaterial aus Ethylen-Vinylacetat-Copolymer kann beispielsweise erhalten werden durch Ausstreichen und Trocknenlassen einer einen Thermoplasten oder eine Thermoplasten-Mischung enthaltenden flüssigen Dispersionsfarbe, aus beispielsweise einer 55%igen wässrigen Dispersion einer Ethylen-Vinylacetat-Mischung und 45 % Flammschutzadditiv(en). Eine geeignete flüssige Dispersionsfarbe ist beispielsweise unter der Bezeichnung PYRO-SAFE DG-S, eine bereits verarbeitungsfertig konfektionierte Brandschutzfolie unter der Bezeichnung PYRO-SAFE DG-OA kommerziell erhältlich (svt Brandschutz Vertriebsgesellschaft mbH International, Seevetal, Deutschland, www.svt.de).

Bei dieser Ausführungsform wird die Melaminharzschaumschicht mittels der thermoplastischen Matrix der Flammschutzmittelschicht unmittelbar auf die Flammschutzmittelschicht geklebt, ohne dass es einer separaten Klebschicht bedürfte. Die thermoplastische Matrix der Flammschutzmittelschicht entwickelt bei dieser Ausführungsform bei ausreichender Erwärmung über Raumtemperatur Klebeigenschaften, die nicht nur vorteilhaft dazu eingesetzt werden können, die Flammschutzmittelschicht mit dem Träger zu verbinden, sondern auch dazu, die Melaminharzschaumschicht mit der Flammschutzmittelschicht zu verbinden. Hierzu kann die Melaminharzschaumschicht während des Herstellungsprozesses der Brandschutzabdeckung zu einem Zeitpunkt auf die Flammschutzmittelschicht aufgebracht werden, zu dem die thermoplastische Matrix der Flammschutzmittelschicht diese Klebeigenschaften aufweist. Beispielsweise kann die Flammschutzmittelschicht bei der Temperatur von 80° Celsius hergestellt und anschließend während der Trocknung der Flammschutzmittelschicht mit der Melaminharzschaumschicht verklebt werden.

In einem zweiten Aspekt betrifft die vorliegende Erfindung eine Anordnung, umfassend eine Kabeltragkonstruktion und eine bandagenartig außen um die Kabeltragkonstruktion gewickelte Brandschutzabdeckung nach dem ersten Aspekt der Erfindung, wobei die Brandschutzabdeckung mit ihrer die Flammschutzmittelschicht und die Melaminharzschaumschicht aufweisenden ersten Fläche der Kabeltragkonstruktion zugewendet ist. Vorzugsweise umfasst die erfindungsgemäße Anordnung mindestens ein in die Kabeltragkonstruktion eingelegtes Kabel. Bei dieser Ausführungsform ist die erfindungsgemäße Brandschutzabdeckung nach Art einer Bandage oder Manschette um eine vorzugsweise mit Kabeln belegte Kabeltragkonstruktion gelegt. Dabei weisen die Flammschutzmittelschicht, die vorzugsweise eine Dämmschichtbildnerschicht ist, und die darauf befindliche Melaminharzschaumschicht zum Inneren des Kabelkanals und damit zu darin befindlichen Kabeln hin. Die Melaminharzschaumschicht sorgt für eine gute Schalldämmung. Im Brandfall verkohlt die Melaminharzschaumschicht und gibt einen Ringsspalt frei, der für den Fall, dass die Flammschutzmittelschicht ein Dämmschichtbildner ist, von diesem ausgefüllt werden kann.

In einem dritten Aspekt betrifft die vorliegende Erfindung eine Anordnung, umfassend mindestens ein Kabel und eine bandagenartig außen um das mindestens eine Kabel gewickelte Brandschutzabdeckung nach dem ersten Aspekt der Erfindung, wobei die Brandschutzabdeckung mit ihrer die Flammschutzmittelschicht und die Melaminharzschaumschicht aufweisenden ersten Fläche dem Kabel zugewendet ist. Bevorzugt ist das mindestens eine Kabel mit der bandagenartig darum gewickelten erfindungsgemäßen Brandschutzabdeckung in eine Kabeltragkonstruktion eingelegt.

Bei dieser Ausführungsform sind Kabel unmittelbar von der Brandschutzabdeckung bandagen- oder manschettenartig umgeben. Ein von der Brandschutzabdeckung umgebenes Kabelbündel kann dann in einen Kabelkanal eingelegt sein. Selbstverständlich ist es auch möglich, Kabel mit der Brandschutzabdeckung zu umwickeln, ohne das umwickelte Kabelbündel in eine Kabeltragkonstruktion einzulegen. Darüber hinaus ist es auch möglich, eine Kabeltragkonstruktion, in die ein mit der Brandschutzabdeckung umwickeltes Kabelbündel eingelegt ist, ihrerseits mit einer Brandschutzabdeckung bandagenartig zu umgeben.

In einem vierten Aspekt betrifft die vorliegende Erfindung auch ein Verfahren zur Herstellung der erfindungsgemäßen Brandschutzabdeckung gemäß dem ersten Aspekt der vorliegenden Erfindung. Bei dem Verfahren wird auf einen flexiblen im Wesentlichen unelastischen flächigen Träger mit einer ersten Fläche und einer gegenüberliegenden zweiten Fläche auf der ersten Fläche eine Flammschutzmittelschicht und unmittelbar auf der Flammschutzmittelschicht eine Melaminharzschaumschicht angeordnet.

In einer bevorzugten Ausführungsform des erfindungsgemäßen Verfahrens umfasst die Flammschutzmittelschicht mindestens ein Flammschutzmittel, das in eine thermoplastische Matrix eingebettet ist, die bei Erwärmung oberhalb Raumtemperatur (20 °C), Klebeigenschaften aufweist. Die Flammschutzmittelschicht wird bei dieser Ausführungsform des erfindungsgemäßen Verfahrens bei einer Verarbeitungstemperatur, bei der die thermoplastische Matrix Klebeigenschaften aufweist, das Flammschutzmittel jedoch noch nicht auslöst, auf den Träger aufgebracht, und die Melaminharzschaumschicht wird auf die Flammschutzmittelschicht aufgebracht, solange die thermoplastische Matrix noch Klebeigenschaften aufweist. Beispielsweise kann die Flammschutzmittelschicht bei ≥80 °C auf den Träger aufgebracht werden. Während die Flammschutzmittelschicht auf Raumtemperatur abkühlt, kann die Melaminharzschaumschicht auf die Flammschutzmittelschicht aufgebracht werden, während deren thermoplastische Matrix noch Klebeigenschaften aufweist. Auf diese Weise werden Flammschutzmittelschicht und Melaminharzschaumschicht direkt über die thermoplastische Matrix der Flammschutzmittelschicht miteinander verbunden. Eine das Brandverhalten verschlechternde zusätzliche Klebeschicht ist nicht erforderlich.

Vorzugsweise wird eine thermoplastische Matrix verwendet, deren Klebeigenschaften sich erst oder zumindest erst in praktisch nutzbarem Ausmaß bei einer Temperatur oberhalb Raumtemperatur, vorzugsweise bei einer Temperatur von mindestens 15 °C, 20 °C, 25 °C, 30 °C, 35 °C, 40 °C, 45 °C, 50 °C, 55 °C oder 60 °C oberhalb Raumtemperatur (20 °C) entfalten. Die Verarbeitungstemperatur liegt dann selbstverständlich ebenfalls bei oder oberhalb der Temperatur, ab der die thermoplastische Matrix Klebeigenschaften aufweist. Die Reaktionstemperatur des mindestens einen Flammschutzmittels, beispielsweise eines intumeszierenden Materials, liegt dabei soweit oberhalb der Verarbeitungstemperatur, dass das mindestens eine Flammschutzmittel nicht oder praktisch nicht reagiert. Die Temperaturdifferenz zwischen Verarbeitungstemperatur und Reaktionstemperatur beträgt vorzugsweise mindestens 10 °C, weiter bevorzugt mindestens 20 °C, 25 °C, 30 °C, 35 °C, 40 °C oder 45 °C, besonders bevorzugt mindestens 50 °C, 55 °C, 60 °C, 65 °C oder 70 °C. Bei einer Verarbeitungstemperatur von ≥ 80 °C kann die Reaktionstemperatur beispielsweise ≥ 150 °C betragen. Wie bereits dargelegt, liegt die Reaktionstemperatur darüber hinaus möglichst in der Nähe der Verkohlungstemperatur der Melaminharzschaumschicht.

Die Erfindung wird im Folgenden anhand von Figuren und bevorzugten Ausführungsformen beispielhaft näher erläutert.
Figur 1 zeigt eine Ausführungsform einer erfindungsgemäßen Brandschutzabdeckung.
Figur 2 zeigt eine Ausführungsform einer erfindungsgemäßen Anordnung aus einer Brandschutzabdeckung, die eine Kabeltragkonstruktion bandagenartig umgibt.

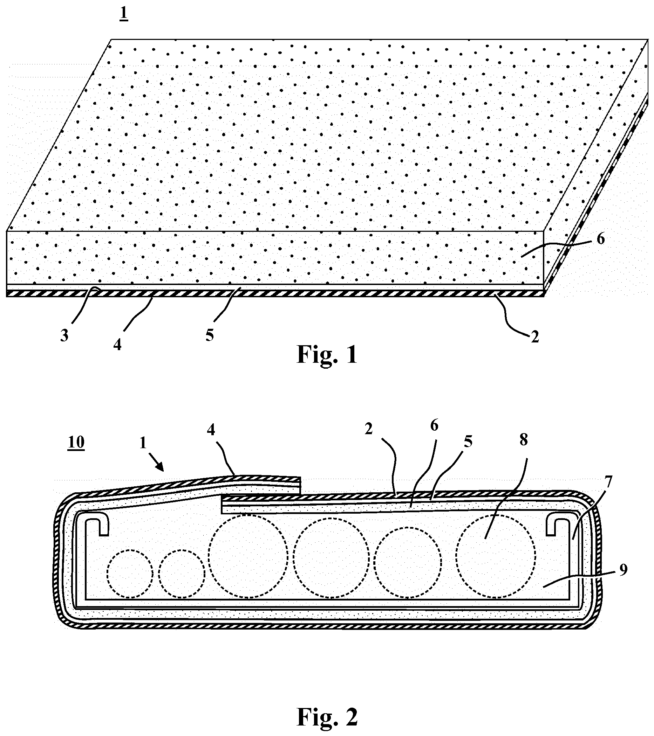

Figur 1 zeigt schematisch eine Ausführungsform einer erfindungsgemäßen Brandschutzabdeckung 1. Die Darstellung ist, insbesondere hinsichtlich der Schichtdicken, nicht maßstäblich. Die Abbildung zeigt einen flächigen flexiblen Träger 2, hier ein Glasfasergewebe, mit einer ersten Fläche 3 und einer zweiten Fläche 4. Auf der ersten Fläche 3 ist eine Flammschutzmittelschicht 5, hier eine Schicht aus einem Dämmschichtbildner, angeordnet. Unmittelbar auf der Flammschutzmittelschicht 5 ist eine Melaminharzschaumschicht 6 angeordnet. Die Melaminharzschaumschicht 6 weist hier beispielsweise eine Schichtdicke von 5 mm auf, während Träger 2 und Flammschutzmittelschicht 5 eine Schichtdicke von nicht mehr als 1 mm aufweisen. Die Brandschutzabdeckung 1 kann per Hand beispielsweise gefaltet, umgeschlagen oder aufgerollt werden. Die zweite Fläche 4 weist hier keine weitere Beschichtung auf.

Figur 2 zeigt schematisch einen Querschnitt durch eine Ausführungsform einer Anordnung 10 mit einer hier im Wesentlichen im Querschnitt u-förmigen Kabeltragkonstruktion 7 und einer bandagen- oder manschettenartig um die Kabeltragkonstruktion 7 herumgeschlagenen Brandschutzabdeckung 1, wie sie in Figur 1 dargestellt ist. Die Brandschutzabdeckung weist mit der Melaminharzschaumschicht 6 und der Flammschutzmittelschicht 5 zum Inneren 9 der Kabeltragkonstruktion 7. In die Kabeltragkonstruktion 7 sind Kabel 8 eingelegt. Die Brandschutzabdeckung 1 kann mit hier nicht dargestellten Mitteln, beispielsweise Metallbändern oder dergleichen, fixiert sein. Im Brandfall verkohlt die Melaminharzschaumschicht 6, während die Flammschutzmittelschicht 5 aus einem Dämmschichtbildner aufschäumt. Der von der Melaminharzschaumschicht 6 freigegebene Ringspalt wird von dem aufschäumenden Dämmschichtbildner wieder verschlossen. Darüber hinaus werden vorzugsweise auch Räume zwischen den Kabeln 8 von dem Dämmschichtbildner verschlossen, so dass eine Ausbreitung von Feuer und/oder Rauch über die Kabeltragkonstruktion 7 verhindert wird.

## Patentansprüche

1. Brandschutzabdeckung (1), insbesondere für eine Kabeltragkonstruktion (7), umfassend einen flexiblen im Wesentlichen unelastischen flächigen Träger (2) mit einer ersten Fläche (3) und einer gegenüberliegenden zweiten Fläche (4), wobei auf der ersten Fläche (3) eine Flammschutzmittelschicht (5) und unmittelbar auf der Flammschutzmittelschicht (5) eine Melaminharzschaumschicht (6) angeordnet ist.

2. Brandschutzabdeckung (1) nach Anspruch 1, wobei die Reaktionstemperatur der Flammschutzmittelschicht (5) im Wesentlichen der Verkohlungstemperatur der Melaminharzschaumschicht (6) entspricht.

3. Brandschutzabdeckung (1) nach Anspruch 1 oder 2, wobei der Träger (2) a) aus einem nicht-brennbaren Gewebe besteht oder ein nicht-brennbares Gewebe umfasst, wobei das Gewebe vorzugsweise Glasfasergewebe ist oder umfasst, oder b) aus einer thermoplastischen, duroplastischen oder metallischen Folie besteht oder eine thermoplastische, duroplastische oder metallische Folie umfasst.

4. Brandschutzabdeckung (1) nach einem der vorhergehenden Ansprüche, wobei der Träger (2) im Wesentlichen rechteckförmig ist.

5. Brandschutzabdeckung (1) nach einem der vorhergehenden Ansprüche, wobei auf der zweiten Fläche (4) eine Polyurethanschicht mit eingelagerten Aluminiumpartikeln angeordnet ist.

6. Brandschutzabdeckung (1) nach einem der vorhergehenden Ansprüche, wobei die Flammschutzmittelschicht (5) mindestens ein in eine thermoplastische Matrix eingebettetes Flammschutzmittel, vorzugsweise einen Dämmschichtbildner, umfasst und die Melaminharzschaumschicht (6) durch die thermoplastische Matrix der Flammschutzmittelschicht (5) klebend gehalten ist.

7. Anordnung (10), umfassend eine Kabeltragkonstruktion (7) und eine bandagenartig außen um die Kabeltragkonstruktion (7) gewickelte Brandschutzabdeckung (1) nach einem der Ansprüche 1 bis 5, wobei die Brandschutzabdeckung (1) mit ihrer die Flammschutzmittelschicht (5) und die Melaminharzschaumschicht (6) aufweisenden ersten Fläche (3) der Kabeltragkonstruktion (7) zugewendet ist.

8. Anordnung (10) nach Anspruch 7, ferner umfassend mindestens ein in die Kabeltragkonstruktion (7) eingelegtes Kabel (8).

9. Anordnung, umfassend mindestens ein Kabel (8) und eine bandagenartig außen um das mindestens eine Kabel (8) gewickelte Brandschutzabdeckung (1) nach einem der Ansprüche 1 bis 5, wobei die Brandschutzabdeckung (1) mit ihrer die Flammschutzmittelschicht (5) und die Melaminharzschaumschicht (6) aufweisenden ersten Fläche (3) dem Kabel (8) zugewendet ist.

10. Anordnung nach Anspruch 9, ferner umfassend eine Kabeltragkonstruktion (7), in die das mindestens Kabel (8) mit der bandagenartig darum gewickelten Brandschutzabdeckung (1) nach einem der Ansprüche 1 bis 5 eingelegt ist.

11. Verfahren zur Herstellung einer Brandschutzabdeckung (1) nach einem der Ansprüche 1 bis 5, wobei auf einen flexiblen im Wesentlichen unelastischen flächigen Träger (2) mit einer ersten Fläche (3) und einer gegenüberliegenden zweiten Fläche (4) auf der ersten Fläche (3) eine Flammschutzmittelschicht (5) und unmittelbar auf der Flammschutzmittelschicht (5) eine Melaminharzschaumschicht (6) angeordnet wird.

12. Verfahren nach Anspruch 11, wobei die Flammschutzmittelschicht (5), die mindestens ein Flammschutzmittel umfasst, das in eine thermoplastische Matrix eingebettet ist, die bei Erwärmung oberhalb Raumtemperatur Klebeigenschaften aufweist, bei einer Verarbeitungstemperatur unterhalb der Reaktionstemperatur des Flammschutzmittels auf den Träger aufgebracht wird, bei der die thermoplastische Matrix Klebeigenschaften aufweist, und wobei die Melaminharzschaumschicht (6) auf die Flammschutzmittelschicht (5) aufgebracht wird, solange die thermoplastische Matrix noch Klebeigenschaften aufweist.
